# EUROPEAN PATENT APPLICATION

(11) **EP 4 591 973 A1**
(43) Date of publication of application: **30.07.2025**
(21) Application number: 24153735.6
(22) Date of filing: 24.01.2024
(51) Int. Cl.: B01J 8/18, B01J 8/38, C08F 2/34, C08F 10/06

(54) **A GAS-PHASE POLYMERIZATION REACTOR AND A PROCESS FOR PREPARING AN OLEFIN POLYMER**

(71) Applicant: Basell Poliolefine Italia S.r.l., 20121 Milano (IT)
(72) Inventor: BALESTRA, Enrico, 44122 Ferrara (IT); RINALDI, Riccardo, 44122 Ferrara (IT); MAZZUCCO, Antonio, 44122 Ferrara (IT); MEI, Gabriele, 44122 Ferrara (IT); PENZO, Giuseppe, 46010 Curtatone (MN) (IT); DORINI, Maurizio, 44122 Ferrara (IT); SCOPA, Paolo, 44122 Ferrara (IT)
(74) Representative: LyondellBasell

(57) **Abstract**

A gas-phase polymerization reactor for the gas-phase polymerization of olefins; said gas polymerization reactor (1) is a multizone circulating reactor comprising: a first polymerization zone (2), which is configured and arranged for flowing upwards growing polyolefin particles; a second polymerization zone (3), which is configured and arranged for flowing the growing polyolefin particles in a downward direction (DD) and comprises a lateral wall (W); an upper connection zone (4) interconnecting top portions of the first and the second polymerization zone (2, 3); a lower connection zone (5) interconnecting lower portions of the first and the second polymerization zone (2, 3); and a detection assembly (6) configured to measure at least a temperature at said lateral wall (W).

## Description

### TECHNICAL FIELD

The present invention relates to a gas-phase polymerization reactor for the gas-phase polymerization of olefins and a process of preparing an olefin polymer.

### BACKGROUND OF THE INVENTION

Gas-phase polymerization methods are economical processes for the polymerization of olefins such as homopolymerizing ethylene or propylene or copolymerizing ethylene or propylene with other olefins. Suitable reactors for carrying out such gas-phase polymerizations are for example fluidized bed reactors, stirred gas-phase reactors or multizone circulating reactors. These methods are usually carried out in a gas phase comprising monomers and possibly comonomers and often additionally also other gaseous components such as polymerization diluents, for example nitrogen or alkanes, or hydrogen as molecular weight modifier or low-molecular weight reaction products. The obtained products are generally solid polyolefin particles which are formed by polymerization catalyst systems usually comprising particulate catalyst solids.

Examples of reactors for carrying out such gas-phase polymerizations are disclosed in US2018178180A1, US20200031957A1 and US20110054127A1.

US2018178180A1 discloses a process for starting a gas-phase olefin polymerization reaction for producing a particulate polyolefin by polymerizing one or more olefins in a multizone circulating reactor.

US20200031957A1 discloses a process for the preparation of heterophasic propylene copolymer compositions comprising a random propylene copolymer and an elastomeric propylene copolymer, the process being carried out in a multizone circulating reactor having two interconnected polymerization zones.

US20110054127A1 discloses a process for the polymerization of olefins in a gas-phase reactor having interconnected polymerization zones.

Fluidized bed reactors are reactors in which the polymerization takes place in a bed of polyolefin particles which is maintained in a fluidized state by feeding in a reaction gas mixture at the lower end of a reactor, usually below a gas distribution grid having the function of dispensing the gas flow, and taking off the gas again at the top of the fluidized bed reactor. The reaction gas mixture is then returned to the lower end of the reactor via a recycle line equipped with a centrifugal compressor and a heat exchanger for removing the heat of polymerization. The flow rate of the reaction gas mixture has to be sufficiently high firstly to fluidize the bed of finely divided polymer present in the polymerization zone and secondly to remove the heat of polymerization effectively.

Multi-Zone Circulating Reactors are formed by two zones. The first zone, usually called "riser" operates as fluidized gas reactor in transport conditions. The growing polymer particles leave the riser and enter in the second zone, called "downcomer", where they fall downwards by gravity in a densified form.

Multizone circulating reactors are also, for example, described in WO 97/04015 A1 and WO 00/02929 A1, which all have the above mentioned two interconnected polymerization zones, the riser, in which the growing polyolefin particles flow upward under fast fluidization or transport conditions and the downcomer, in which the growing polyolefin particles flow downward in a densified form under the action of gravity. The polyolefin particles leaving the riser enter the downcomer and the polyolefin particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyolefin and reaction gaseous mixture coming from the riser. The growing polyolefin particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is equipped with a centrifugal compressor and a heat exchanger for removing the heat of polymerization. Preferably, a line for feeding catalyst or a line for feeding polyolefin particles coming from an upstream reactor is arranged on the riser and a polymer discharge system is located in the bottom portion of the downcomer. The introduction of make-up monomers, comonomers, hydrogen and/or inert components may occur at various points along the riser and the downcomer.

The reactor can work with a homogeneous gas composition ('monomodal') or with two separate gas mixtures in the two legs ('bimodal'): the latter condition is obtained by feeding a barrier stream of gas (in some cases containing propylene) into the upper part of the downcomer, thereby differentiating the gas compositions of the two legs.

Some of the most important operating parameters to keep under control in a Multi-Zone Circulating Reactor (MZCR) and, in particular, in the downcomer are the polymer softening and the tackiness between adjacent polymer particles and/or with the reactor wall which can lead to formation of polymer lumps.

In the downcomer, the polyolefin solid particles fall downward by gravity in a densified form.

This part of the reactor operates adiabatically, hence due to the reaction heat developed along this polymerization zone a temperature profile is developed, with increasing temperatures from top to bottom.

In this context, the growth of said polymer lumps can partially clog this polymerization zone with detrimental effects on the whole polymerization process.

The MZCR design traditionally includes inner temperature probes (thermowells) positioned at various elevations and at different radial orientations in the downcomer that allow a monitoring of the temperature profile.

These temperature probes extend by about 100 mm inside the reactor, consequently they measure the temperature of the particles which are flowing at about 100 mm from the reactor wall.

Although these sensors provide generally a good indication of the downcomer temperature profile during stable operating conditions and a too high detected temperature is usually considered to increase the risk of polymer softening and, thus, of formation of polymer lumps, it has been experimentally observed that often clogging takes place before these probes measure a significant increase of temperatures. In other words, reactors also including temperature probes of the above type are often not capable of reliably identifying a potential clogging problem before it is too late.

The object of the present invention is to provide a gas-phase polymerization reactor and a process of preparing an olefin polymer, that overcome the drawbacks of the known art at least partially, and which eventually are, at the same time, simple and inexpensive to implement.

### SUMMARY

According to the invention there is provided a gas-phase polymerization reactor and a process of preparing an olefin polymer according to the appended independent claims and, preferably, according to any one of the claims directly or indirectly depending on the independent claims.

### BRIEF DESCRIPTION OF THE DRAWINGS

The invention is hereinafter described with reference to the accompanying drawings, which depict some non-limiting embodiments thereof, wherein:
- figure 1 is schematic and side view of a gas-phase polymerization reactor in accordance with the present disclosure;
- figures 2 to 7 are cross section at different heights of the gas-phase polymerization reactor of figure 1.

### DETAILED DESCRIPTION

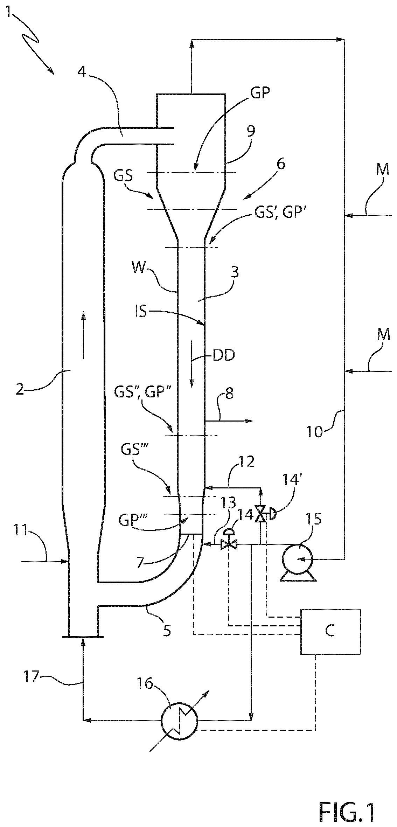

In accordance with a first aspect of the present invention it is herein provided gas-phase polymerization reactor 1 (figure 1) for the gas-phase polymerization of olefins.

The gas-phase polymerization reactor 1 is a multizone circulating reactor comprising: a first polymerization zone 2, which is (a riser and is) configured (adapted) and arranged for flowing upwards growing polyolefin particles; a second polymerization zone 3, which is (a downcomer and is) configured (adapted) and arranged for flowing the growing polyolefin particles in a downward direction DD and comprises at least a lateral wall W delimiting an internal space IS of the second polymerization zone 3; an upper connection zone 4 interconnecting a top portion of the first polymerization zone 2 and a top portion of the second polymerization zone 3; a lower connection zone 5 interconnecting a lower portion of the first polymerization zone 2 and a lower portion of the second polymerization 3; and a detection assembly 6 configured to measure (and, in particular, to monitor) at least a temperature at the lateral wall W (in particular, in at least one given position).

Surprisingly, it has been experimentally observed that thanks to such a detection assembly 6 a better understanding of the behavior of the polymer particles with respect to their softening and clustering is obtained. In particular, it has been observed that the measurement of the temperature at the wall W gives a good indication of the (current) risk of formation of obstructions inside the second polymerization zone 3.

According to some non-limiting embodiments, an operator compares (and/or the control unit C is configured to compare) the temperature (measured - monitored - by the detection assembly 6) at the lateral wall W with a reference temperature (or reference temperatures). In particular, in these cases, if the temperature (measured - monitored - by the detection assembly 6) at the lateral wall W is outside a certain given range (for example, over a threshold temperature - e.g. over about 110°C), the operator acts (and/or the control unit C is configured - adapted - to act) on the gas-phase polymerization reactor 1 (more precisely, on components thereof), usually in order to bring back the temperature (measured - monitored) within the given range.

Advantageously but not necessarily, in actual use, the operator regulates (the functioning of the) gas-phase polymerization reactor 1 as a function of the temperature (measured - monitored - by the detection assembly 6) at the lateral wall W.

Alternatively or in addition, according to non-limiting embodiments, the gas-phase polymerization reactor 1 comprises a control unit C configured to (at least partially) regulate (the functioning of) the gas-phase polymerization reactor 1 as a function of the temperature (measured - monitored - by the detection assembly 6) at the lateral wall W.

In this way, thanks to above-described improved knowledge of the temperature profile inside the internal space IS, it is possible to reduce the risks of clogging.

Several are the operations that can be carried out by the operator (and/or the control unit C) as a function of the temperature (measured - monitored - by the detection assembly 6) at the lateral wall W (in order to regulate the temperature profile in the second polymerization zone 3).

As mere and non-limiting examples, the operator regulates (and/or the control unit C is configured to at least partially regulate) the (functioning of the) gas-phase polymerization reactor 1 so as to carry out an activity selected from: regulating (changing) the speed of the polyolefin particles in the second polymerization zone 3 in the downward direction DD (at the second polymerization zone 3), regulating (changing) the temperature (at the first polymerization zone 2 - and/or of the second polymerization zone 3), regulating the feeding (flow rate) of a polymerization catalyst (to the gas-phase polymerization reactor in particular to the first polymerization zone 2), regulating the feeding (flow rate) of the olefins (to the gas-phase polymerization reactor 1, in particular to the second polymerization zone 3), stopping the (functioning of the) gas-phase polymerization reactor 1, emitting an error signal and a combination thereof.

In this respect, it should be noted that the temperature profile in the second polymerization zone 3 is a complex phenomenon and it has been seen that it depends on several factors such as: the velocity of the particles transferred from the second polymerization zone 3 to the first polymerization zone 2; the radial velocity profile of the particles along the horizontal section, the production rate and reactivity in the second polymerization zone 3; the distribution of the particles along the horizontal section; the type, amount and distribution of the antistatic agent fed to the reactor.

Please note that in the present text by measurement of temperature at the lateral wall W it is meant not only a measurement of the temperature of (or, more precisely, on the surface of) the lateral wall W but also a measurement of the temperature in its close proximity (i.e. less than 50 mm apart - in particular, less than 25 mm apart; more in particular, less than 10 mm apart; even more in particular, less than 10 mm apart - from the lateral wall W) inside the internal space IS.

Advantageously but not necessarily, the detection assembly 6 is configured to measure (and, in particular, to monitor) the temperature on the lateral wall W (in particular, on its external surface). In this respect, it is worth pointing out that a measurement of the temperature on the lateral wall W (in particular, on its external surface) gives a very good indication of the temperature at (on) the internal surface of the lateral wall W. In this respect, please note that the temperature on the internal surface of the lateral wall W is of particular interest, since it has been experimentally observed that in case of formation of polymer lumps, temperatures can be particularly high in this area.

Advantageously but not necessarily, the gas-phase polymerization reactor 1 comprises at least an inner temperature probe P configured to measure at least a temperature of the internal space IS (at at least one location).

In particular, the operator regulates (and/or the control unit C is configured to regulate) - at least partially - the (functioning of the) gas-phase polymerization reactor 1 as a function of the temperature at the lateral wall W and of the temperature of the internal space IS. In particular, the operator regulates (and/or the control unit C is configured to regulate) - at least partially - the (functioning of the) gas-phase polymerization reactor 1 as a function of a comparison (difference) between the temperature at the lateral wall and said temperature of the internal space IS.

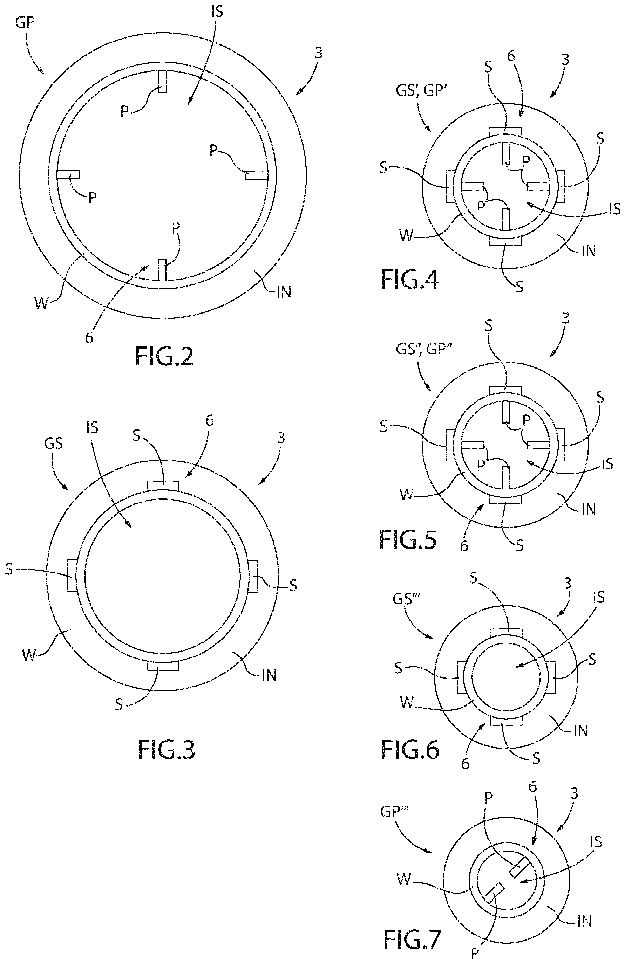

Advantageously but not necessarily (see figures 2-7), the detection assembly 6 comprises at least a sensor S, which is configured to measure (monitor) the temperature at said lateral wall W at a given position. In particular, the inner temperature probe P, configured to measure the temperature of the internal space IS at a given location, is substantially at a same height (with respect to the downward direction) of the given position.

In particular, the operator regulates (and/or the control unit C is configured - to at least partially - regulate) the (functioning of the) gas-phase polymerization reactor 1 as a function of the temperature at the lateral wall W at the given position and of the temperature of the internal space IS at the given location. More in particular, the operator regulates (and/or the control unit C is configured - to at least partially - regulate) the (functioning of the) gas-phase polymerization reactor 1 as a function of a comparison (difference) between the temperature at the lateral wall W at the given position and the temperature of the internal space IS at the given location.

In particular, in these cases, if the temperature (measured - monitored - by the detection assembly 6) at the lateral wall W is too far from the temperature of the internal space IS (for example, they are more than 5°C apart; in particular, they are more than 10°C apart), the operator acts (and/or the control unit C is configured to act) on gas-phase polymerization reactor 1 (more precisely, on components thereof), usually in order to bring back the temperature (at the lateral wall W - measured by the detection assembly 6) within a given range (or stop the gas-phase polymerization reactor 1).

According to some non-limiting embodiments, the sensor/s S is/are located on (in direct contact with) external surface of the lateral wall W. The temperature/s detected by the sensor/s S substantially corresponds to the temperature at the lateral wall W (also at its inner surface). Advantageously but not necessarily, the lateral wall W is made of metal (a good conducting material), in particular steel (more precisely, carbon steel), and, in particular, has a thickness of about 5 mm to 80 mm. In particular, the gas-phase polymerization reactor 1 also comprises an insulating layer IN placed around the lateral wall W and the sensor/s S. More in particular, the sensor/s is/are positioned between the lateral wall W and the insulating layer IN.

Advantageously but not necessarily, the detection assembly 6 comprises at least a first group GS of sensors S, which are configured to measure the temperature at the lateral wall W at different positions located substantially at a same first height (with respect to the downward direction DD) of the second polymerization zone 3. In other words, the sensors S of the first group GS are substantially on a same plane substantially perpendicular to said downward direction DD.

It has been experimentally seen that, in this way, it is possible to have an even better knowledge of the temperature profile inside the internal space IS and thus of the behavior of the polymer particles with respect to their softening and clustering.

Advantageously but not necessarily, the operator regulates (and/or the control unit C is configured to regulate) - at least partially - the (functioning of the) gas-phase polymerization reactor 1 as a function of the temperatures at the lateral wall W at the different positions located substantially at the same first height. More in particular, the operator regulates (and/or the control unit C is configured to regulate) - at least partially - the (functioning of the) gas-phase polymerization reactor 1 as a function of a comparison (difference) between the temperatures of the lateral wall W at the different positions located substantially at the same first height.

In this way, thanks to above-described improved knowledge of the temperature profile inside the internal space IS, it is possible to reduce the risks of clogging.

In particular, in these cases, if the temperatures (measured - monitored - by the detection assembly 6) at the lateral wall W at a same height (in particular, at the first height) are too different (for example, they are more than 5°C apart; in particular, they are more than 10°C apart), the operator acts (and/or the control unit C is configured to act) on gas-phase polymerization reactor 1 (more precisely, on components thereof), usually in order to bring back the temperatures (at the lateral wall W - in particular, measured - by the detection assembly 6) within a given range (or stop the gas-phase polymerization reactor 1).

In particular, the operator acts (and/or the control unit C is configured to act) on gas-phase polymerization reactor 1 in order to reduce the temperature (temperatures) at the lateral wall W (which is/are too high).

Advantageously but not necessarily, the detection assembly 6 comprises at least a second group GS' (or GS" or GS‴) of sensors S, which are configured to measure the temperature of said lateral wall at different positions located substantially at a same second height (with respect to the downward direction) of the second polymerization zone 3, which second height is different from the first height.

It has been experimentally seen that, in this way, it is possible to have an even better knowledge of the temperature profile inside the internal space IS and thus of the behavior of the polymer particles with respect to their softening and clustering.

Advantageously but not necessarily, the operator regulates (and/or the control unit C is configured to regulate) - at least partially - the (functioning of the) gas-phase polymerization reactor 1 as a function of the temperatures at the lateral wall W at the different positions located substantially at the same second height. More in particular, the operator regulates (and/or the control unit C is configured to regulate) - at least partially - the (functioning of the) gas-phase polymerization reactor 1 as a function of a comparison (difference) between the temperatures of the lateral wall W at the different positions located substantially at the same second height.

In particular, in these cases, if the temperatures (measured - monitored - by the detection assembly 6) at the lateral wall W at a same height (in particular, at the second height) are too different (for example, they are more than 5°C apart; in particular, they are more than 10°C apart), the control unit C is configured to act on gas-phase polymerization reactor 1 (more precisely, on components thereof), usually in order to bring back the temperatures (at the lateral wall W - in particular, measured - by the detection assembly 6) within a given range (or stop the gas-phase polymerization reactor 1).

With reference to the specific embodiment of the enclosed figures, please note that we have indicated GS just as an example of the first group of sensors S. One of GS', GS" and GS‴ could also be considered the first group of sensors S and *vice versa* GS could also be considered the second group of sensors S. In any case, in such a specific embodiment, the groups of sensors S placed at different heights (with respect to the downward direction) of the second polymerization zone 3 are four overall: GS, GS', GS", GS‴. More precisely, the group GS of sensors S is located at an higher tapered part of the second polymerization zone 3; the group GS' of sensors S is located below the group GS of sensors S; the group GS" is located below the group GS'; the group GS‴ is located below the group GS" at a lower tapered part of the second polymerization zone 3.

Please note that according to different, non-depicted and non-limiting embodiments, the groups GS (GS', GS" and/or GS‴) of sensors S can also be in any number different from four. As mere examples, the groups GS (GS', GS" and/or GS‴) of sensors S can be less than four (e.g. two or three) or more (e.g six or eight) or much more (e.g. ten or fifteen) than four.

According to some non-limiting embodiments (as depicted in figures 2-7), group GS comprises four sensors S (located 90° from each other - in particular around the wall W); group GS' comprises four sensors S (located 90° from each other - in particular around the wall W); group GS" comprises four sensors S (located 90° from each other - in particular around the wall W); and group GS‴ comprises four sensors S (located 90° from each other - in particular around the wall W). Also in this case, the number of sensors S for each group GS (GS', GS" and/or GS‴) of sensors can also be different from four.

Please note that are particularly advantageous the non-limiting embodiments according to which the gas-phase polymerization reactor 1 has the group GS‴ (in particular, comprising at least three sensors S - more in particular, at least four sensors S) located at a lower tapered part of the second polymerization zone 3.

In this regard, please note that in this part of the second polymerization zone 3, since the temperature is particularly high, it is more likely that lumps may form.

Advantageously but not necessarily, the detection assembly 6 comprises at least a first group GP of inner temperature probes P, each of which is configured to measure the temperature of the internal area IS (at a respective location). The inner temperature probes P of the first group GP are located substantially at a same height (with respect to the downward direction DD) of the second polymerization zone 3. In particular, the first group GP is located at the above mentioned first height. In other words, the probes P of the first group GP are substantially on a same plane substantially perpendicular to said downward direction DD.

It has been experimentally seen that, in this way, it is possible to have an even better knowledge of the temperature profile inside the internal space IS and thus of the behavior of the polymer particles with respect to their softening and clustering.

Advantageously but not necessarily, the operator regulates (and/or the control unit C is configured to regulate) - at least partially - the (functioning of the) gas-phase polymerization reactor 1 as a function of the temperatures detected by the first group GS of sensors and the first group GP of probes at a same first height. More in particular, the operator regulates (and/or the control unit C is configured to - at least partially - regulate) the (functioning of the) gas-phase polymerization reactor 1 as a function of a comparison (difference) between the temperatures, at the different positions, detected by the first group GS of sensors and the first group GP of probes, substantially at the same first height.

In this way, thanks to above-described improved knowledge of the temperature profile inside the internal space IS, it is possible to reduce the risks of clogging.

In particular, in these cases, if (one of) the temperatures (measured - monitored - by the detection assembly 6) detected by the first group GS of sensors and (one of) the temperatures detected by the first group GP of probes substantially at the same first height are too different (for example, they are more than 5°C apart; in particular, they are more than 10°C apart), the operator acts (and/or the control unit C is is configured to - at least partially - act) on gas-phase polymerization reactor 1 (more precisely, on components thereof), usually in order to bring back the (differences of the) temperatures (at the lateral wall W - in particular, measured - by the detection assembly 6) within a given range.

More in particular, in these cases, if the temperature (measured - monitored - by the detection assembly 6) detected by one sensor S of the first group GS is too different from the temperatures detected (measured - monitored) by one probe P of the first group GP, substantially at a same first height are (for example, they are more than 5°C apart; in particular, they are more than 10°C apart), the operator acts (and/or the control unit C is configured to act) - at least partially - on the gas-phase polymerization reactor 1 (more precisely, on components thereof), usually in order to bring back the (differences of the) temperature/s (at the lateral wall W - in particular, measured - by the detection assembly 6) within a given range.

Advantageously but not necessarily, the detection assembly 6 comprises at least a second group GP', GP" or GP‴ of inner temperature probes P, which are configured to measure temperatures of the internal area IS (at a respective locations) substantially at a same height different from the first height, for example the second height (with respect to the downward direction DD), of the second polymerization zone 3.

It has been experimentally seen that, in this way, it is possible to have an even better knowledge of the temperature profile inside the internal space IS and thus of the behavior of the polymer particles with respect to their softening and clustering.

With reference to the specific embodiment of the enclosed figures, please note that we have indicated GP just as an example of the first group of probes P. One of GP', GP", GP‴ could also be considered the first group of probes P and *vice versa* GP could also be considered the first group of probes P. In any case, in such a specific embodiment, the groups of probes P placed at different heights (with respect to the downward direction) of the second polymerization zone 3 are four overall: GP, GP', GP", GP‴. More precisely, the group GP of probes P is located at an higher part of the second polymerization zone 3; the group GP' of probes P is located below the group GP (in particular, substantially at the same height of the group GS' of sensors S); the group GP" of probes P is located below the group GP' (in particular, substantially at the same height of the group GS" of sensors S); the group GP‴ of probes P is located below the group GP" at a lower tapered part of the second polymerization.

Please note that according to different, non-depicted and non-limiting embodiments, the groups GP (GP', GP" and/or GP‴) of probes P can also be in any number different from four. As mere examples, the groups GP (GP', GP" and/or GP‴) of probes P can be less than four (e.g. two or three) or more (e.g six or eight) or much more (e.g. ten or fifteen) than four.

According to some non-limiting embodiments (as depicted in figures 2-7), group GP comprises four probes P (located 90° from each other); group GP' comprises four probes P (located 90° from each other); group GP" comprises four probes P (located 90° from each other); and group GP‴ comprises two probes P (located 180° from each other).

Also in this case, the number of probes P for each group GP (GP', GP" and/or GP‴) can also be different from two and four.

According to non-limiting embodiments, the gas-phase polymerization reactor 1 comprises a valve assembly 7, which is located at the lower portion of the second polymerization zone 3.

Advantageously but not necessarily, the first polymerization zone 2 is a riser, which is configured (adapted) and arranged for flowing upwards growing polyolefin particles under fast fluidization (or transport) conditions; the second polymerization zone 3 is a downcomer, which is configured (adapted) and arranged for flowing the growing polyolefin particles in the downward direction DD in a densified form; the upper connection zone 4 interconnecting the top portion of the first polymerization zone 2 and the top portion of the second polymerization zone 3 so that polyolefin particles leaving the first polymerization zone 2 enter the second polymerization zone 3; the lower connection zone 5 interconnecting the lower portion of the first polymerization zone 2 and the lower portion of the second polymerization zone 3 so that polyolefin particles leaving the second polymerization zone 3 enter the first polymerization zone 2, thus establishing a circulation of polyolefin particles through the first polymerization zone 2 and the second polymerization zone 3.

In some non-limiting embodiments, in the first polymerization zone (riser - figure 1), fast fluidization conditions are established by feeding a gas mixture made from or containing one or more alpha-olefins at a velocity higher than the transport velocity of the polymer particles. In some embodiments, the velocity of the gas mixture is between 0.5 and 15 m/s, alternatively between 0.8 and 5 m/s. As used herein, the terms "transport velocity" and "fast fluidization conditions" are as defined in "D. Geldart, Gas Fluidisation Technology, page 155 et seq., J. Wiley & Sons Ltd., 1986".

In some non-limiting embodiments (figure 1), in the second polymerization zone 3 (downcomer), the polymer particles flow under the action of gravity in a densified form, thereby achieving the high values of density of the solid (mass of polymer per volume of reactor) and approaching the bulk density of the polymer. As used herein, the term "densified form" of the polymer indicates that the ratio between the mass of polymer particles and the reactor volume is higher than 80% of the "poured bulk density" of the polymer. In some non-limiting embodiments and in the downcomer, the polymer flows downward in a plug flow and small quantities of gas are entrained with the polymer particles.

According to non-limiting embodiments, the two interconnected polymerization zones 2 and 3 are operated such that the gas mixture coming from the riser is totally or partially prevented from entering the downcomer by introducing into the upper part of the downcomer a liquid or gas stream, denominated "barrier stream", having a composition different from the gaseous mixture present in the riser. In some embodiments, one or more feeding lines for the barrier stream are placed in the downcomer close to the upper limit of the volume occupied by the polymer particles flowing downward in a densified form.

In particular, the gas-phase polymerization reactor 1 comprises a gas/solid separator 9, located at the top portion of the second polymerization zone 3 and configured (adapted) and arranged for (at least partially) separating unreacted monomers from the polymer particles (in particular, so that the unreacted monomers are - at least partially - removed from the second polymerization zone 3).

In some non-limiting embodiments, the feed of the barrier stream causes a difference in the concentrations of monomers (olefins) or a molecular weight regulator (e.g. hydrogen) inside the riser and the downcomer, thereby producing a bimodal polymer.

In some non-limiting embodiments, the gas-phase polymerization process involves a reaction mixture made from or containing the gaseous monomers, inert polymerization diluents and chain transfer agents to regulate the molecular weight of the polymeric chains. In some embodiments, hydrogen is used to regulate the molecular weight. In some non-limiting embodiments, the polymerization diluents are selected from C₂-C₈ alkanes, alternatively propane, isobutane, isopentane and hexane. In some non-limiting embodiments, propane is used as the polymerization diluent in the gas-phase polymerization.

In this text, unless otherwise specified, "Cₓ-C_{y}" refers to a group and/or a compound which is intended having x to y carbon atoms.

In particular, the separated unreacted monomers, optionally together with polymerization diluents, flow up to the top of separator 9 and are successively recycled to the bottom of the riser 1 via the recycle line 10.

Olefins which may be polymerized in the gas-phase polymerization reactors of the present disclosure are especially 1-olefins, i.e. hydrocarbons having terminal double bonds, without being restricted thereto. Preference is given to nonpolar olefinic compounds. Particularly preferred 1-olefins are linear or branched C₂ -C₁₂-1-alkenes, in particular linear C₂ -C₁₀-1-alkenes such as ethylene, propylene, 1-butene, 1-pentene, 1-hexene, 1-heptene, 1-octene, 1-decene or branched C₂ -C₁₀-1-alkenes such as 4-methyl-1 - pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbomene or dienes such as 5-ethylidene-2-norbomene, norbornadiene or ethylnorbomadiene. It is also possible to polymerize mixtures of two or more olefins.

In particular, the gas-phase polymerization reactor is configured (adapted) for the homopolymerization or copolymerization of ethylene and/or propylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to polymerizations in which ethylene is copolymerized with from 0.1 wt.% to 12 wt.% of 1-hexene and/or 1-butene.

Advantageously but not necessarily, the gas-phase polymerization reactor 1 comprises one or more lines M, configured to feed a (gaseous or liquid) mixture comprising one or more olefin monomers, optionally the molecular weight regulator (such as hydrogen) and optionally a polymerization diluent to the gas recycle line 10, according to the knowledge of the person skilled in art.

According to some non-limiting embodiments, the gas-phase polymerization reactor 1 comprises a line 11 for continuously introducing catalyst components into the first polymerization zone 2 (riser). In particular, line 11 is connected to the lower portion of the first polymerization zone 2.

Advantageously but not necessarily, the gas-phase polymerization reactor 1 also comprises discharge line 8, which is configured (adapted) for discharging the produced polymer from reactor 1 itself and, in particular, connected to the second polymerization zone 3 (more in particular, in the area of the lower portion thereof).

More precisely but not compulsorily, the discharge line 8 is arranged between the top portion of the second polymerization zone 3 and the valve assembly 7 (above the valve assembly 7).

Advantageously but not necessarily, the discharge line 8 comprises a control valve (not shown in Fig. 1) for continuously controlling the flow rate of polymer produced through discharge line 8.

In some cases, additional polymer discharge lines with respect to discharge line 8 can conveniently be placed in the bottom part of the downcomer.

Advantageously but not necessarily, the gas-phase polymerization reactor 1 also comprises a dosing line 12, which is located between the valve assembly 7 and the top portion of the second polymerization zone 3 (in particular, between the valve assembly 7 and the discharge line 8) and is configured (adapted) to feed a dosing gas into (the lower part of) the downcomer (i.e. the second polymerization zone 3).

According to some non-limiting embodiments, said dosing line 12 can be conveniently split into multiple lines that can suitably be arranged around a section of the reactor, preferably in an even number (e.g. two, four, six, eight). The dosing gas to be introduced through dosing line 12 is conveniently taken from the recycle line 10. The flow rate of dosing gas is adjusted by means of one or more control valves 14' suitably arranged on dosing line 12.

In particular (in actual use), the flow of polymer particles circulated between downcomer 3 and riser 2 is conveniently adjusted by varying the opening of the valve assembly 7 (at the bottom of the downcomer) and/or by varying the flow rate of said dosing gas entering the downcomer via dosing line 12.

Advantageously but not necessarily, the gas-phase polymerization reactor 1 also comprises a carrier line 13 for introducing a carrier gas at the lower connection zone 5. In particular, the flow rate of carrier gas is adjusted by means of a control valve 14, which is suitably arranged on line 13.

In some non-limiting embodiments, the carrier gas is taken from the gas recycle line 10. In particular, the gas recycle stream of line 5 is first subjected to compression by a compressor 15 and a minor percentage of the recycle stream passes through a line 13, thereby entering the lower connection zone 5 and diluting the solid phase of polymer flowing through the lower connection zone 5. The major part of the recycle stream, downstream the compressor 15, is subjected to cooling in a heat exchanger 16 and successively introduced via line 17 at the bottom of the riser 2 (i.e. the first polymerization zone) at a high velocity, thereby ensuring fast fluidization conditions in the polymer bed flowing along the riser 2.

More precisely but not necessarily, the carrier gas (coming from the carrier line 13) merges with the densified polymer coming from downcomer 3 at the inlet portion of the lower connection zone 5, after exiting the slits of a gas distribution grid (not shown). In particular, the top end of the distribution grid is coincident with the inlet of the lower connection zone 5, and the distribution grid. The gas distribution grid is formed by a plurality of trays fixed to lower connection zone 5 to form slits in the overlapping area of adjacent trays. More precisely, the gas distribution grid is as described in Patent Cooperation Treaty Publication No. WO 2012/031986.

In some non-limiting embodiments, the polymerization reactor is operated by adjusting the polymerization conditions and the concentration of monomers and hydrogen in the riser and in the downcomer, thereby tailoring the bimodal productions. In some embodiments, the gas mixture entraining the polymer particles and coming from the riser is partially or totally prevented from entering the downcomer, thereby polymerizing two different monomers compositions in the riser and the downcomer. In some non-limiting embodiments, a gaseous or liquid barrier stream is fed through a line placed in the upper portion of the downcomer. In some non-limiting embodiments, the barrier stream has a composition different from the gas composition present inside the riser. In some non-limiting embodiments, the flow rate of the barrier stream is adjusted such that an upward flow of gas counter-current to the flow of the polymer particles is generated. In some e non-limiting embodiments, the counter-current is at the top of the downcomer, thereby acting as a barrier to the gas mixture coming from the riser. In some embodiments, the barrier effect at the top of the downcomer occurs as described in European Patent Application No. EP 1012195 A1.

In some non-limiting embodiments and by feeding hydrogen in the riser, the molecular weight of the homopolymer or random copolymer component is lowered, thereby yielding a polymer with high melt flow rate. In some embodiments and at the same time, feeding a barrier stream with little or no hydrogen yields a high molecular weight homopolymer or random copolymer component in the downcomer.

In some non-limiting embodiments, the gas-phase polymerization reactor 1, having the two interconnected polymerization zones, is placed upstream or downstream one or more other polymerization reactors based on liquid- or gas-phase technologies, thereby giving rise to a sequential multistage polymerization process. For instance, a fluidized bed reactor is used to prepare a first polymer component, which is successively fed to the gas-phase polymerization reactor 1 of the present disclosure to prepare a second polymer component and a third polymer component.

In some non-limiting embodiments, the process is carried out by using olefin polymerization catalysts, alternatively titanium-based Ziegler-Natta-catalysts.

In some embodiments, the process is carried out in the presence of Ziegler-Natta catalysts made from or containing:
i. a solid catalyst component made from or containing Mg, Ti, a halogen and an electron donor compound (internal donor),
ii. an alkylaluminum compound, and
iii. optionally, an electron-donor compound (external donor).

In some non-limiting embodiments, component (i) is prepared by contacting a magnesium halide, a titanium compound having at least a Ti-halogen bond, and optionally an electron donor compound. In some non-limiting embodiments, the magnesium halide is MgCl₂ in active form as a support for Ziegler-Natta catalysts. In some non-limiting embodiments, the titanium compounds are TiCl₄, TiCl₃, or Ti-haloalcoholates of formula Ti(OR)_{n-y}X_{y} , where n is the valence of titanium, y is a number between 1 and n-1, X is a halogen and R is a hydrocarbon radical having from 1 to 10 carbon atoms, can also be used.

In some non-limiting embodiments, electron donor compounds for preparing Ziegler type catalysts are selected from the group consisting of alcohols, glycols, esters, ketones, amines, amides, nitriles, alkoxysilanes and aliphatic ethers. In some non-limiting embodiments, these electron donor compounds are used alone or in mixtures with other electron donor compounds.

In some non-limiting embodiments, when the catalyst includes an alkylaluminum compound, such as in Ziegler-Natta catalysts, the molar ratio of solid catalyst component to alkylaluminum compound introduced into the polymerization reactor is in the range from 0.05 to 3, alternatively from 0.1 to 2, alternatively from 0.5 to 1.

In some non-limiting embodiments, the catalysts are subjected to prepolymerization before being fed to the polymerization reactor. In some embodiments, the prepolymerization occurs in a loop reactor, In some non-limiting embodiments, the prepolymerization of the catalyst system is carried out at a low temperature, alternatively in a range of from 0° C. to 60° C.

In some non-limiting embodiments, additives, fillers and pigments are added. In some embodiments, the additional components are selected from the group consisting of nucleating agents, extension oils, mineral fillers, and other organic and inorganic pigments. In some embodiments, the inorganic fillers are selected from the group consisting of talc, calcium carbonate and mineral fillers and affect mechanical properties, such as flexural modulus and HDT. In some embodiments, talc has a nucleating effect.

In some non-limiting embodiments, the nucleating agents are added in quantities ranging from 0.05 to 2% by weight, alternatively from 0.1 to 1% by weight, with respect to the total weight.

The operating parameters, such as temperature and pressure, are those that are usual in gas- phase catalytic polymerization processes. For example, in both riser and downcomer the temperature is generally comprised between 60°C and 120°C, while the pressure can range from 5 to 50 bar.

Advantageously but not necessarily, the operator regulates (and/or the control unit C is configured to at least partially regulate) the (functioning of the) gas-phase polymerization reactor 1 by controlling at least one component (to which the control unit C is connected) selected from: the control valve 14, the control valve 14', the valve assembly 7, the heat exchanger 16, the line 11, the line/s M and a combination thereof.

In particular, the control unit C is (also) connected to the sensors S and (when present) with the probes P (these connections are not depicted in the figures).

In accordance with a second aspect of the present disclosure, it is also herewith provided a process of preparing an olefin polymer, comprising homopolymerizing a first olefin or copolymerizing the first olefin and one or more second olefins (in particular, at temperatures of from 20 to 200 °C and pressures of from 0.5 to 10 MPa) in the presence of a polymerization catalyst, wherein the polymerization is carried out in the gas-phase polymerization reactor 1 as above described in accordance with the first aspect of the present disclosure. The process further comprises a detection step, during which the detection assembly 6 measures (monitors) at least a temperature at the lateral wall W (in at least one position). In particular, in this way (a) measured (monitored) temperature/s of the lateral wall W is/are obtained.

Advantageously but not necessarily, the process comprises a control step, during which the (functioning of the) gas-phase polymerization reactor 1 is regulated (by the operator and/or by the control unit C - at least partially) as a function of the (measured - monitored) temperature/s of the lateral wall W.

According to some non-limiting embodiments, during the control step, the temperature/s (measured - monitored - by the detection assembly 6) at the lateral wall W and a reference temperature (or reference temperatures) are compared (by the operator and/or by the control unit C). In particular, in these cases, if the temperature (measured - monitored - by the detection assembly 6) at the lateral wall W is outside a certain given range (for example, over a threshold temperature; e.g. 110°C), the gas-phase polymerization reactor 1 is acted upon (more precisely, components thereof are acted upon), usually in order to bring back the temperature (measured - monitored) within the given range (by the operator and/or the control unit C).

Advantageously but not necessarily, during the control step, the (functioning of the) gas-phase polymerization reactor 1 is regulated (by the operator and/or the control unit C) so as to carry out an activity selected from: regulation (change) of the speed of the polyolefin particles in the downward direction DD (at the second polymerization zone 3), regulation (change) of the temperature (at the first polymerization zone 2), regulation (change) of the feeding (flow rate) of a polymerization catalyst (to the gas-phase polymerization reactor; in particular, to the first polymerization zone 2), regulation (change) of the feeding (flow rate) of the olefins (to the gas-phase polymerization reactor 1; in particular, to the second polymerization zone 3), stopping of the (functioning of the) gas-phase polymerization reactor 1, emission of an error signal and a combination thereof.

Advantageously but not necessarily, during the control step, the (functioning of the) gas-phase polymerization reactor 1 is (at least partially) regulated (by the operator and/or the control unit C) by controlling at least one component (to which the control unit C is connected) selected from: the control valve 14, the control valve 14', the valve assembly 7, the heat exchanger 16, the line 11, the line/s M and a combination thereof.

Advantageously but not necessarily, the gas-phase polymerization reactor 1 comprises at least an inner temperature probe P, which measures (monitors) the temperature of the internal space IS (at at least one location), in particular so as to obtain measured (monitored) temperature/s of the internal space IS.

In particular, during the control step, the (functioning of the) gas-phase polymerization reactor 1 is (at least partially) regulated (by the operator and/or the control unit) as a function of the (measured - monitored) temperature at the lateral wall W and of the (measured - monitored) temperature of the internal space IS, in particular as a function of a comparison (difference) between the temperature at the lateral wall W and the temperature of the internal space IS (as well as a function of a comparison - difference - between the temperature sensors at the lateral wall W installed at the same height/elevation).

In particular, if the temperature (measured - monitored - by the detection assembly 6) at the lateral wall W is too far from the temperature of the internal space IS (for example, they are more than 5°C apart; in particular, they are more than 10°C apart), the gas-phase polymerization reactor 1 is acted upon (more precisely, components thereof are acted upon) - in particular, by the operator and/or by the control unit C, usually in order to bring back the temperature (at the lateral wall W - measured by the detection assembly 6) within a given range.

Several are the operations that can be carried out (by the operator - and/or the control unit C) as a function of the temperature (measured - monitored - by the detection assembly 6) at the lateral wall W (in order to regulate the temperature profile in the second polymerization zone 3).

For example, in actual use, when the sensor S (one or more of the sensors S) detects a (measured - monitored) temperature which is too high (e.g. with respect to a given reference temperature, with respect to other temperature/s measured - monitored - by other sensor/s S and/or inner temperature probe/s P - in particular, located the same height of the second polymerization zone 3) the (functioning of the) gas-phase polymerization reactor 1 is regulated (by the operator and/or the control unit C) so as to carry out an activity selected from: increase of the speed of the polyolefin particles in the downward direction DD (at the second polymerization zone 3), reduction of the temperature (at the first polymerization zone 2), reduction the feeding (flow rate) of a polymerization catalyst (to the gas-phase polymerization reactor; in particular, to the first polymerization zone 2), reduction of the feeding (flow rate) of the olefins (to the gas-phase polymerization reactor 1; in particular, to the second polymerization zone 3), stopping of the (functioning of the) gas-phase polymerization reactor 1, emission an error signal and a combination thereof.

Advantageously but not necessarily, the detection assembly 6 comprises at least a first group GS (or GS' or GS" or GS'") of sensors S, which measure the temperature at the lateral wall W at different positions (each at a different respective position) located substantially at a same first height (with respect to the downward direction DD) of the second polymerization zone 3 (so as to obtain measured wall W temperatures). In particular, during the control step, the (functioning of the) gas-phase polymerization reactor 1 is (at least partially) regulated (by the operator and/or by the control unit C) as a function of a comparison (difference) between the (measured - monitored) temperatures of the lateral wall W at the different positions (at the same first height).

More precisely, detection assembly 6 comprises a first group GS (or GS' or GS" or GS‴) of sensors S, which comprises a first sensor S measuring the temperature of said lateral wall W at a first position and at least a second sensor S measuring the temperature of said lateral wall W at a second position different from the first position. The first position and the second position have the same first height (with respect to the downward direction) of the second polymerization zone 3. In particular, during the control step, the (functioning of the) gas-phase polymerization reactor 1 is (at least partially) regulated (by the operator and/or by the control unit C) as a function of difference between the (measured - monitored) temperatures of the lateral wall W at the first position and the second position.

In particular, if the temperatures (measured - monitored - by the detection assembly 6) at the lateral wall W (at the same first height) are too different (for example, they are more than 5°C apart; in particular, they are more than 10°C apart), the gas-phase polymerization reactor 1 is (at least partially) acted upon (more precisely, components thereof are acted upon) - by the operator and/or by the control unit C, usually in order to bring back the temperatures (at the lateral wall W - in particular, measured - by the detection assembly 6) within a given range.

In particular, the gas-phase polymerization reactor 1 is acted upon (by the operator and/or the control unit C) in order to reduce the temperature (temperatures) at the lateral wall W (which is/are too high).

Advantageously but not necessarily, the detection assembly 6 comprises at least a first group GP (GP' or GP" or GP‴) of inner temperature probes P, each of which measures (monitors) the temperature of the internal space IS at a respective different location (so as to obtain measured - monitored temperature/s). The first group GP (GP' or GP" or GP‴) of inner temperature probes P are located substantially at a same height (in particular, at the first height). In particular, during the control step, the (functioning of the) gas-phase polymerization reactor 1 is (at least partially) regulated (by the operator and/or the control unit C) as a function of a comparison (difference) between the temperatures of said lateral wall W at the different positions and the temperatures of the internal space IS at the different locations.

In particular, the homopolymerizing a first olefin or copolymerizing the first olefin and one or more second olefins is carried at a temperature comprised between 60°C and 120°C (and a pressure from 5 to 50 bar).

Advantageously but not necessarily, the process comprises feeding the first olefin with or without one or more the second olefin/s into the gas-phase polymerization reactor 1, contacting the olefins and the polymerization catalyst under reaction conditions and discharging the polymer product from the gas-phase polymerization reactor. The growing polymer particles flow upward through the first polymerization zone 2 under fast fluidization or transport conditions, leave the first polymerization zone 2, pass through the gas/solid separator 9 and enter the second polymerization zone where the polymer particles flow downward under the action of gravity, leave the second polymerization zone 3 and are at least partially reintroduced into the first polymerization zone 2, thus establishing a circulation of polymer between the first polymerization zone 2 and the second polymerization zone 3.

In some non-limiting embodiments, the second polymerization zone 3 comprises a bed of densified polymer particles.

The gas-phase polymerization process of the invention allows the preparation of a large number of polyolefins. Examples of polymers that can be obtained are: highdensity polyethylenes (HDPEs having relative densities higher than 0.940) including ethylene homopolymers and ethylene copolymers with a-olefins having 3 to 12 carbon atoms; linear polyethylenes of low density (LLDPEs having relative densities lower than 0.940) and of very low density and ultra low density (VLDPEs and ULDPEs having relative densities lower than 0.920 down to 0.880) consisting of ethylene copolymers with one or more a-olefins having 3 to 12 carbon atoms; elastomeric terpolymers of ethylene and propylene with minor proportions of diene or elastomeric copolymers of ethylene and propylene with a content of units derived from ethylene of between about 30 and 70% by weight; isotactic polypropylene and crystalline copolymers of propylene and ethylene and/or other a-olefins having a content of units derived from propylene of more than 85% by weight; isotactic copolymers of propylene and a-olefins, such as 1-butene, with an a-olefin content of up to 30% by weight; impact-resistant propylene polymers obtained by sequential polymerisation of propylene and mixtures of propylene with ethylene containing up to 30% by weight of ethylene; atactic polypropylene and amorphous copolymers of propylene and ethylene and/or other a-olefins containing more than 70% by weight of units derived from propylene.

In particular, gas-phase polymerization reactor 1 (with the exception of the structure of the valve assembly 7) and its functioning are as disclosed in one or more of the following patent applications: US2018178180A1, US20200031957A1, US20110054127A1, WO 97/04015 A1, WO 00/02929 A1, US2020031957A1 and US20200031957.

Unless expressly indicated to the contrary, the contents of the references (articles, books, and patent applications etc.) cited in this text are herein recalled in full. In particular, the above-mentioned references are herein incorporated by reference.

Further characteristics of the present invention will emerge from the ensuing description of some merely illustrative and non-limiting examples.

### Examples

Tests have been carried out in a gas-phase polymerization reactor similar to the gas-phase polymerization reactor 1 described above, but with the following differences: the measurements of the groups GS and GP are not provided; instead of the group GP', just one probe P is present; there are three sensors S in group GS'; there are two probes P in group GP"; instead of the group GP'", just one probe P is present.

Runs 1 and 2 were regular, whereas runs 1C and 2C the reactor needed to be stopped. All runs were carried with the same matrix with the parameters and results provided in table 1 below.

**Table 1**

| **Example** | | **1** | **1C** | | **2** | **2C** |
|---|---|---|---|---|---|---|
| **POLYMERIZATION** - **MZCR** | | | | | | |
| Temperature | °C | 68 | 68 | 73 | | 73 |
| Pressure | bar-g | 27 | 27 | 27 | | 27 |
| Gas velocity in riser | m/s | 2.3 | 2.3 | 2.1 | 2.1 | |
| Solid velocity in downcomer | m/s | 0.37 | 0.36 | 0.32 | 0.16 | |
| Residence time | min | 71 | 65 | 59 | 73 | |
| Production | t/h | 18.8 | 18.9 | 19.9 | 18.7 | |
| Mileage | kg/g | 29.1 | 22.7 | 31.1 | 27.1 | |
| H₂/C₃⁻ riser | mol/mol | 0.03 | 0.03 | 0.03 | 0.03 | |
| Ratio between antistatic agent feed to reactor and production rate | Kg/kg | 0.11 | 0.11 | 0.11 | 0.12 | |
| Downcomer top inner temperature | °C | 75.4 | 73.3 | 80.4 | 89.8 | |
| Downcomer top skin temperatures | °C | 74.2 / 73.7 / 73.3 | 83.1 / 81.3 / 80.9 | 84.5 / 83.6 / 83.4 | 92.7 / 86.2 / 96.5 | |
| Max temperature difference between top inner and skin | °C | 2.1 | 9.8 | 4.1 | 6.7 | |
| Max difference between top skin temperatures | °C | 0.9 | 2.2 | 1.1 | 10.3 | |
| Downcomer upper bottom inner temperatures | °C | 82.9 / 82.9 | 81.3 / 83.1 | 88.3 / 88.7 | 95.5 / 95.8 | |
| Downcomer upper bottom skin temperatures | °C | 82.3 / 82.7 / 82.7 / 79.7 | 99.7 / 94.1 / 95.5 / 94.8 | 94.8 / 90.0 / 89.5 / 92.8 | 88.7 / 89.5 / 93.8 / 93.3 | |
| Max temperature difference between upper bottom inner and skin | °C | 3.2 | 18.4 | 6.5 | 7.1 | |
| Max difference between upper bottom skin temperatures | °C | 3.0 | 5.6 | 5.3 | 5.1 | |
| Downcomer lower bottom inner temperature | °C | 84.8 | 85.4 | 90.4 | 105.5 | |
| Downcomer lower bottom skin temperatures | °C | 82.5 / 79.6 / | 98.1 / 94.0 / | 94.2 / 91.5 / | 101.2 / 92.8 / | |
| | | 80.4 / 79.4 | 94.7 / 95.6 | 91.1 / 93.9 | 103.7 / 110.1 | |
| Max temperature difference between lower bottom inner and skin | °C | 5.4 | 12.7 | 3.8 | 12.7 | |
| Max difference between lower bottom skin temperatures | °C | 3.1 | 4.1 | 3.1 | 17.3 | |

| **POLYMER ANALYSIS** | | | | | | |
|---|---|---|---|---|---|---|
| MFR (230°C, 2.16 kg) | dg/min | 12 | 12 | 12 | 12 | |
| Xylene solubles | %wt | 1.6 | 1.9 | 1.3 | 1.8 | |

In run 1C a relatively high difference between the temperature at the lateral wall W at the given position and the temperature of the internal space IS was identified. In run 2C a relatively high difference between the temperature at the lateral wall W at the given position and the temperature of the internal space IS and a relatively high difference between the temperatures detected by the sensors of groups GS' and GS‴. The data give a good indication of the runs, which needed to be stopped.

While the operational data for runs 1 and 2 are referred to a steady state of reactor operation, the operational data reported for runs 1C and 2C are referred to a snapshot of the operational state of the reactor for which the temperature trend (of the difference between internal/external or between the externals themselves) was degenerative, i.e., the difference between the measured values widened over time. This was an indication of an uneven profile of fluid dynamics (solid flow) in the downcomer.

## Claims

1. A gas-phase polymerization reactor for the gas-phase polymerization of olefins, said gas-phase polymerization reactor (1) is a multizone circulating reactor comprising:
- a first polymerization zone (2), which is a riser and is configured and arranged for flowing upwards growing polyolefin particles;
- a second polymerization zone (3), which is a downcomer, is configured and arranged for flowing the growing polyolefin particles in a downward direction (DD) and comprises a lateral wall (W) delimiting an internal space (IS) of the second polymerization zone (3);
- an upper connection zone (4) interconnecting a top portion of the first polymerization zone (2) and a top portion of the second polymerization zone (3);
- a lower connection zone (5) interconnecting a lower portion of the first polymerization zone (2) and a lower portion of the second polymerization (3); and
- a detection assembly (6) configured to measure at least a temperature at said lateral wall (W).

2. The gas-phase polymerization reactor of claim 1 , wherein the detection assembly (6) comprises at least a sensor (S), which is configured to measure the temperature at said lateral wall (W) at a given position; the gas-phase polymerization reactor (1) also comprises at least an inner temperature probe (P) configured to measure the temperature of the internal space (IS) at a given location, which is substantially at a same height of the given position.

3. The gas-phase polymerization reactor of claim 1 or 2, wherein the detection assembly (6) comprises at least a first group (GS) of sensors (S), which are configured to measure the temperature at said lateral wall (W) at different positions located substantially at a same first height of the second polymerization zone (3).

4. The gas-phase polymerization reactor of claim 3, wherein the detection assembly (6) comprises at least a second group (GS' or GS" or GS‴) of sensors (S), which are configured to measure the temperature of said lateral wall (W) at different positions located substantially at a same second height of the second polymerization zone (3); the first and second height being different.

5. The gas-phase polymerization reactor of claim 3 or 4 and comprising at least a first group (GP) of inner temperature probes (P), each of which is configured to measure the temperature of the internal area (IS); the first group (GP) of inner temperature probes (P) being located substantially at said first height.

6. The gas-phase polymerization reactor of any one of claims 1 to 5 and comprising configured to at least partially regulate the gas-phase polymerization reactor (1) as a function of said at least a temperature at the lateral wall (W).

7. The gas-phase polymerization reactor of claim 6, wherein the control unit (C) is configured to at least partially regulate the gas-phase polymerization reactor (1) so as to carry out an activity selected from: regulating the speed of the polyolefin particles second polymerization zone (3) in the downward direction (DD), regulating the temperature at the first polymerization zone (2), regulating the feeding of a catalyst polymerization, regulating the feeding of the olefins, stopping the gas-phase polymerization reactor, emitting an error signal and a combination thereof.

8. The gas-phase polymerization reactor of claim 6 or 7 and comprising at least an inner temperature probe (P) configured to measure at least a temperature of the internal space (IS); the control unit (C) being configured to at least partially regulate the gas-phase polymerization reactor (1) as a function of said temperature at the lateral wall (W) and of said temperature of the internal space (IS).

9. The gas-phase polymerization reactor of any one of claims 1 to 8, wherein:
- the first polymerization zone (2) is a riser, which is configured and arranged for flowing upwards growing polyolefin particles under fast fluidization conditions;
- the second polymerization zone (3) is a downcomer, which is configured and arranged for flowing the growing polyolefin particles in the downward direction (DD) in a densified form;
- the upper connection zone (4) interconnecting the top portion of the first polymerization zone (2) and the top portion of the second polymerization zone (3) so that polyolefin particles leaving the first polymerization zone (2) enter the second polymerization zone (3);
- the lower connection zone (5) interconnecting the lower portion of the first polymerization zone (2) and the lower portion of the second polymerization zone (3) so that polyolefin particles leaving the second polymerization zone (3) enter the first polymerization zone (2), thus establishing a circulation of polyolefin particles through the first polymerization zone (2) and the second polymerization zone (3).

10. A process of preparing an olefin polymer, comprising homopolymerizing a first olefin or copolymerizing the first olefin and one or more second olefins at temperatures of from 20 to 200 °C and pressures of from 0.5 to 10 MPa in the presence of a polymerization catalyst, wherein the polymerization is carried out in the gas-phase polymerization reactor (1) of any one of claims 1 to 9;
the process further comprising a detection step, during which the detection assembly (6) measures at least a temperature at said lateral wall (W).

11. The process of claim 10 and comprising a control step, during which the gas-phase polymerization reactor (1) is at least partially regulated as a function of said temperature at the lateral wall (W).

12. The process of claim 11, wherein, during the control step, the gas-phase polymerization reactor (1) is at least partially regulated so as to carry out an activity selected from: regulation of the speed of the polyolefin particles in a downward direction (DD), regulation of the temperature at the first polymerization zone (2), regulation of the feeding of a polymerization catalyst, regulation of the feeding of the olefins, stopping of the gas-phase polymerization reactor (1), emission of an error signal and a combination thereof.

13. The process of claim 11 or 12, wherein the gas-phase polymerization reactor (1) comprises at least an inner temperature probe (P), which measures the temperature of the internal space (IS); during the control step, the gas-phase polymerization reactor (1) is at least partially regulated as a function of said temperature at the lateral wall (W) and of said temperature of the internal space (IS).

14. The process of any one of claims 11 to 13, wherein the detection assembly (6) comprises at least a first group (GS) of sensors (S), which measure the temperature of said lateral wall (W) at different respective positions located substantially at a same first height of the second polymerization zone (3); during the control step, the gas-phase polymerization reactor (1) is at least partially regulated as a function of a comparison between the temperatures of said lateral wall (W) at the different positions.

15. The process of claim 11 to 14, wherein the detection assembly (6) comprises at least a first group (GS) of sensors (S), which measure the temperature of said lateral wall (W) at different respective positions located substantially at a same first height of the second polymerization zone (3); the detection assembly (6) comprises at least a first group (GP) of inner temperature probes (P), each of which measure the temperature of the internal space (IS) at a respective different location; the first group (GP) of inner temperature probes (P) being located substantially at said first height; during the control step, the gas-phase polymerization reactor (1) is at least partially regulated as a function of a comparison between the temperatures of said lateral wall (W) at the different positions and the temperatures of the internal space (IS) at the different locations.

16. The process of claim 11 to 15, and comprising feeding the first olefin with or without one or more the second olefin/s into the gas-phase polymerization reactor (1), contacting the olefins and the polymerization catalyst under reaction conditions and discharging the polymer product from the gas-phase polymerization reactor, wherein the growing polymer particles flow upward through the first polymerization zone (2) under fast fluidization or transport conditions, leave the first polymerization zone (2), pass through the gas/solid separator (9) and enter the second polymerization zone (3) where the polymer particles flow downward under the action of gravity, leave the second polymerization zone (3) and are at least partially reintroduced into the first polymerization zone (2), thus establishing a circulation of polymer between the first polymerization zone (2) and the second polymerization zone (3).
